# EUROPEAN PATENT APPLICATION

(11) **EP 2 270 708 A1**
(43) Date of publication of application: **05.01.2011**
(21) Application number: 09305614.1
(22) Date of filing: 29.06.2009
(51) Int. Cl.: G06F 21/02

(54) **Data security in solid state memory**

(71) Applicant: Thomson Licensing, 92130 Issy-les-Moulineaux (FR)
(72) Inventor: Blawat, Meinolf, 30659, Hannover (DE)
(74) Representative: Thies, Stephan

(57) **Abstract**

The invention concerns data security in solid state memory. The solid state memory (2) contains at least one specific area (4) directed to storing sensitive information. The invention is for handling security relevant data in solid state memories (2) and to protect the data from unauthorized access. According to the invention, the solid state memory (2) includes a security element (6) for deleting the specific memory area (4) at start up.

## Description

The present invention relates to data security in solid state memory, e. g. non-volatile random access memory.

In today's computer systems solid state memory is used for providing data to a processor or to dedicated computing means. When the computer is shut down, the power supply of the random access memory is switched off and the random access memory looses all data which have been stored during operation within a short time. After power up, all necessary data have to be loaded again into the random access memory. Coming along with this characteristic, all security relevant data input by a user in the system during operation is lost within a certain time after shut down, independently if the computer was shut down regularly or irregularly, e. g. by power failure.

Non-volatile solid state random access memories (NV-RAM) show such versatile characteristics to that it is expected that they will in future replace all the different kind of computer storages used today, like cache-, main- and virtual-memory.

Non-volatile memories allow a system to return into exactly the same state when it has been switched off. Therefore, no "boot" process has to be executed. After power is switched on again, the system is immediately available in the same state as it was before switching it off. The technical term in the art to describe this feature is "instant on". Coming along with this feature is a need for special care of security relevant data, for example pass words, bank account or credit card information, internet certificates and hard disc decryption codes. Mechanisms for preventing the data from getting into wrong hands are needed. Therefore, whenever the system is switched off - while all the data including the security codes are still in the memory - it has to be assured that the data can not be misused. Accessibility of all critical access codes has to be controlled so that they are prevented from being reconstructed by unauthorized users.

Several different NV-RAM technologies are showing promising results to become the successor of the currently used SD-RAM, DRAM, NAND- and NOR Flash, optical- and hard disk based storages. Nevertheless, a security problem comes together with all of these technologies.

Even in volatile random access memory similar problems occur. While it is at first sight assumed that volatile random access memory erases immediately when it loses power, the time it takes until the content of a volatile random access memory is lost can take many seconds even at room temperature depending on the memory. This is also the case, when the memory is removed from its motherboard. J. Alex Halderman et. al., "Lest We Remember: Cold Boot Attacks on Encryption Keys", Proc. of 2008 USENIX Security Symposium, p. 45-50, disclose techniques to access and recover random access memory content of a memory which was temporarily switched off. This is especially a problem, if a laptop computer or the like is stolen while running or while being in suspend mode. All security relevant information can then be retrieved from the memory which is removed from the stolen computer within a short time and high success rate.

Painstakingly written programs take care of the here mentioned security aspects, and should and will of course in future do so. But it is definitely a clear improvement of the data security, if the hardware itself has implemented some security mechanisms, which actually are totally independent from the software or logical means. Security relevant information is stored in random access memory somewhere distributed over the memory. Consequently, it is known, that there are memory areas containing security relevant information. The addresses of these areas, so to say their locations in the memory, are usually unknown. The security relevant information is arbitrarily distributed in the memory depending on the booting process and the time at which the information, e.g. an internet certificate, was used first after login by this user and the operations the user performed before. Similar problems arise with other solid state memories.

It is an object of the invention to handle security relevant data in solid state memories and to protect the data from unauthorized access.

According to the invention, a solid state memory has at least one specific area at specific addresses for storing sensitive information. The solid state memory includes a security element for deleting the specific memory area at start up. The security element is for example realized as a pin, which is directly connected to the power supply. Preferably, the pin is connected on chip to the power supply pin so that the power connection of the security element can not be cut without cutting the power supply of the whole chip or physically destroying the chip. At the moment of power on, the activation voltage is applied to the pin and the erasing process is started. In another solution, a dedicated circuit is implemented in the solid state memory which detects power up and erases the specific area for storing sensitive information. A third solution uses software for deleting the specific memory area. In this case, it has to be assured that the software cannot be manipulated from outside. Deleting the specific memory area is realised, for example by writing reset values or random values to the memory. Each data erasing process known in the art is useable. Deleting the sensitive information from the specific memory area at start up has the advantage that the memory area in which sensitive information might be stored is erased before this area is accessible to a user. This process also provides high security in case of improper system shutdown, e.g. because power supply is interrupted. Deleting the sensitive data in case of regular shutdown of the computer does not provide this security extent, because the system might be switched off irregularly in which case the shut down process will not be properly completed and thus will not be able to delete the relevant data or in case the memory is removed from the computer during operation. Especially in case the computer is stolen while being in suspend mode, it is assured that the sensitive data are erased before an unauthorized person gets access to the memory. Alternatively or additionally, the deleting process is already performed at power off. Therefore, the security element performs deletion of the specific memory area of the solid state memory. Power resources for performing at least the deleting process have to be assured in case the memory is irregularly shut down or is detached from the motherboard during operation. This is realized, e.g. by a capacitive energy storage or any other energy storage, which is realized on the memory chip and can not be interrupted or detached from the memory without destroying the memory.

Advantageously, the specific memory area of the solid state memory is for storing security relevant data. Security relevant data are e.g. pass words, bank account or credit card information, internet certificates, hard disc decryption codes and all information with some privacy interest for the user. Data security is especially important for such data.

Preferably, security relevant data points to memory addresses where further security relevant data is stored. Thus, in the specific area for storing the security relevant data memory addresses are stored. As such, these memory addresses are data for operating the storage medium and not privacy data of the user. These memory addresses identify regions of the memory, where the real security relevant data of the user are stored. As such, by deleting the memory addresses, the security relevant user data can not be identified any longer. The security relevant data is then in fact distributed somewhere in the memory, but there is no hint available at which specific location in the memory. This enhances security of these data. In a further refinement, first the memory areas that are identified by the addresses are deleted and afterwards the addresses itself stored in the specific memory area for storing security relevant data are deleted. This further enhances the security level, because the security relevant data is not retrievable, even not by scanning the whole memory and, in addition, the locations where these data were stored in the past are distributed over the whole memory. Techniques for retrieving earlier erased data will be handicapped.

Advantageously, the security element is for checking if data is stored in the specific memory area at start up. If security relevant data is detected at start up, the data is deleted. This is either done by deleting a link to a memory area where the security relevant data is stored or by deleting the data itself or both. This has the advantage that the memory areas have only to be deleted, which means in fact rewriting some random numbers in these areas, if there is in fact security relevant data stored in these areas. If these areas do not contain any information so that the areas are unused or contain random number, the deleting step does not have to be performed. This saves processing time and does not wear down the memory by unnecessary deleting or rewriting processes.

Preferably, the specific on-board circuitry for deleting the specific memory area at start up is included in the solid state memory. This has the advantage that the memory and the deleting means, which is realised as an on board circuitry, are physically coupled. It is not possible to remove the deleting circuitry from the memory before power on and therefore, it is not possible to bypass the security mechanism this way.

Advantageously, the apparatus performs an operation to suppress the accessibility of the specific memory area before the deleting process is completed. This further enhances the security level. An unauthorised access to the memory area containing the security data in parallel to the deleting process, due to which at least some security relevant data might be retrieved before the memory areas are deleted entirely, is thus suppressed.

Advantageously, the memory is a non-volatile solid state memory. The above described problem especially occurs in case of a memory that does not lose the stored content even if the memory was cut from power supply for a long time. These kinds of memory are e.g. non-volatile solid state memory. It is therefore advantageous to implement the above described security element in such memories. However, as described above, also volatile memory are suffering from the problem that their content is stored for a certain time after power off and retrieving sensitive data by unauthorized persons is possible.

According to the invention a computer system is proposed which includes an above described solid state memory and performs a respective method for operating that solid state memory.

For better understanding the invention shall now be explained in more detail in the following description with reference to the figures. It is understood that the invention is not limited to these exemplary embodiments and that specified features can also expediently be combined and/or modified without departing from the scope of the present invention.
- Fig. 1: depicts a solid state memory with enhanced data security according to the invention.
- Fig. 2: depicts a method for operating a solid state memory with enhanced data security according to the invention.

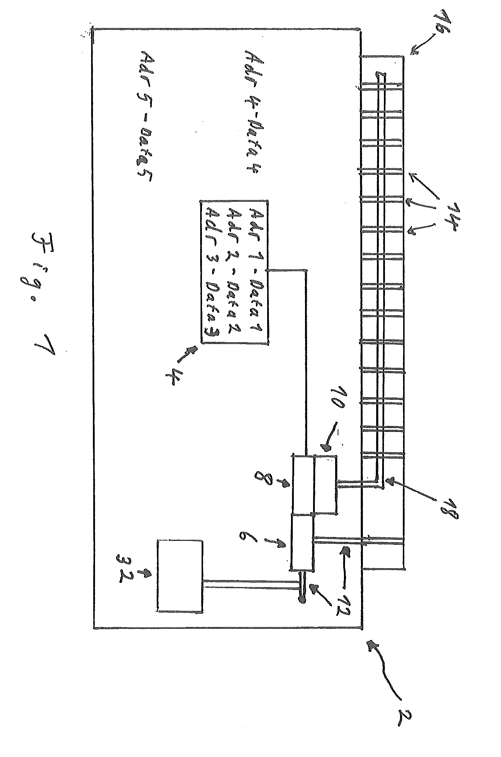

Fig. 1 depicts a solid state memory 2 including registers in an address space Adr1, Adr2, Adr3, Adr4, Adr5 for storing data Data1, Data2, Data3, Data4, Data5. Access to the registers of the memory is possible over an IO-port 16. The solid state memory 2 includes a security element 6, which is automatically activated at start up of the memory 2. This activation is performed by electrically coupling the security element 6 to the power supply pin 12 of the memory. The security element 6 is coupled to the pin 12 for power supply of the memory such that the connection of the element to the power supply can not be interrupted without destroying the memory. The security element 6 is for checking if data Data1, Data2, Data3 is stored in specific memory areas 4 at start up. These specific memory areas 4 are for storing security relevant information and are defined via their addresses Adr1, Adr2, Adr3 in the address space. Security relevant information is for example pass words, bank account or credit card information, internet certificates, hard disc decryption codes and all information with some privacy interest for the user. Security relevant information is also address pointers Data2, Data3, which are pointing to other memory addresses Adr4, Adr5 at which this kind of information Data4, Data5 is stored. If data Data1, Data2, Data3 is stored in these areas 4 at start up, a specific on board circuit 8 is notified. The on board circuit 8 deletes the specific memory areas 4. In case the data Data2, Data3 points to addresses Adr4, Adr5 in the memory, where security relevant data Data4, Data5 is stored, the onboard circuit 8 also deletes these data Data4, Data5. A suppressing means 10 is activated by the on board circuit 8 to protect the memory from being accessed via the pins 14 of the IO port 16 until the deleting process is finished. This is realized via an interruption line 18, which is directly connected to the suppressing means 10 and which can not be physically cut without destroying the memory. For example, this line applies a low resistance when activated that no data can be transferred over the pins 14 and applies a high resistance when deactivated so that the pins 14 transfer the data from the solid state memory 2 normally via the-IO port 16. The solid state memory 2 optionally includes an energy storage 32 for providing sufficiently power resources for deleting the security relevant data at power off. In case the power supply is suddenly cut, e.g. caused by detaching the solid state memory 2 from the motherboard during operation, the energy storage 32 assures power supply for the deleting process of the security relevant information. Thus, the security element 6 is optionally also activated at power off and a deleting process of the security relevant data is reliably realized using the power of the energy storage 32. The energy storage is realized on the memory storage 2 in a way that it is not detachable without destroying the whole memory.

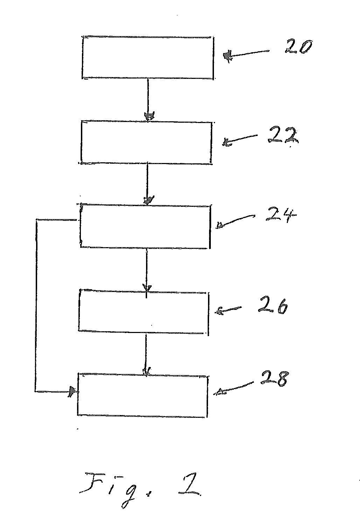

According to Fig. 2, a method for operating a solid state memory 2 with enhanced security is described. At the moment the supply voltage of the solid state memory 2 is turned on in step 20, the security element 6 is notified. The suppressing means 10 suppresses in step 22 accessibility of the specific memory areas 4 for storing security relevant data. Alternatively, in step 22 accessibility of the whole memory 2 is suppressed. Next, a check is made in step 24 whether or not data Data1, Data2, Data3 is stored in the specific memory areas 4. If data Data1, Data2, Data3 is detected in these memory areas 4, the data Data1, Data2, Data3 is deleted in step 26. If the detected data Data2, Data3 is address data Adr4, Adr5, the data Data4, Data5 stored at these addresses Adr4, Adr5 is also deleted. Deleting data Data1, Data2, Data3 either means setting back the memory to its initial state or writing random and therefore useless data to the memory for at least one time. Writing random data to memory multiple times consecutively further enhances the security level. After the data Data1, Data2, Data3 is deleted, access to the memory over the IO-port 16 is allowed in step 28. If no data is identified in the specific memory areas 4, access to the memory over the IO-port 16 is allowed in step 28.

## Claims

1. Solid State Memory (2) having at least one area for storing sensitive information (Data1, Data2, Data3, Data4, Data5), **characterized in that** the sensitive information (Data1, Data2, Data3) are stored in an specific area (4) at specific addresses (Adr1, Adr2, Adr3, Adr4, Adr5) in the Solid State Memory (2) and the Solid State Memory (2) includes a security element (6) for deleting the content of the specific memory area (4) at start up and/or power off.

2. Solid State Memory (2) according to claim 1, **characterized in that** the specific memory area (4) is a memory area for storing security relevant data ((Data1, Data2, Data3).

3. Solid State Memory (2) according to claim 2, **characterized in that** the security relevant data (Data2, Data3) points to memory addresses (Adr4, Adr5) where further security relevant data (Data4, Data5) is stored.

4. Solid State Memory (2) according to one of claims 1-3, **characterized in that** the security element (6) is provided to perform checking (16) if data (Data1, Data2, Data3) is stored in the specific memory area (4) at start up and for deleting (18) the data (Data1, Data2, Data3) if the check is positive.

5. Solid State Memory (2) according to one of claims 1-4, **characterized in that** the Solid State Memory (2) includes a specific on board circuit (8) for deleting (18) the content (Data1, Data2, Data3) of the specific memory area (4) at start up.

6. Solid State Memory (2) according to one of claims 1-5, **characterized in that** the Solid State Memory (2) further includes a suppressing means (10) for suppressing accessibility of the specific memory area (4) before the deleting (18) process is completed.

7. Solid State Memory (2) according to one of claims 1-6, **characterized in that** the memory (2) is a non-volatile Solid State Memory.

8. Method for operating a Solid State Memory (2), the Solid State Memory (2) having a specific area (4) for storing sensitive information (Data1, Data2, Data3), including the step:
- deleting (18) the content of the specific memory area (4) at start up.

9. Method according to claim 8, wherein the specific memory area (4) is a memory area for storing security relevant data (Data1, Data2, Data3).

10. Method according to claim 9, wherein the security relevant data (Data2, Data3) points to memory addresses (Adr4, Adr5) where further security relevant data (Data4, Data5) is stored.

11. Method according to one of claims 8-10, further including the steps:
- checking (16) if data (Data1, Data2, Data3) is stored in the specific memory area (4) at start up,
- deleting (18) the data (Data1, Data2, Data3) if the checking step (16) has a positive result, and
- suppressing (14) accessibility of the specific memory area before the deleting process (16) is completed.

12. Method according to claim 11, the deleting step further includes:
- deleting (16) the data (Data4, Data5) stored at the memory address (Adr4, Adr5), if the identified data (Data2, Data3) in the specific memory address (Ard2, Adr3) is address data pointing to a memory address (Adr4, Adr5) where security relevant data (Data4, Data5) is stored.

13. Computer system, **characterized in that** it includes a Solid State Memory (2) according to one of claims 1-7 or performs a method according to one of claims 8-12.
